# EUROPÄISCHE PATENTANMELDUNG

(11) **EP 4 789 532 A1**
(43) Veröffentlichungstag der Anmeldung: **12.08.2026**
(21) Anmeldenummer: 25224304.3
(22) Anmeldetag: 17.12.2025
(51) Int. Cl.: A01F 25/13, A01F 25/14, A01F 25/16

(54) **ANORDNUNG ZUM ABDECKEN ZUMINDEST EINER SCHÜTTUNG IN ZUMINDEST EINEM FAHRSILO**

(30) Priorität: 07.02.2025 DE 102025104613
(71) Anmelder: Thümler, Rainer, 26931 Elsfleth (DE)
(72) Erfinder: Thümler, Rainer, 26931 Elsfleth (DE)
(74) Vertreter: Jabbusch, Matthias

(57) **Zusammenfassung**

Bei einer Anordnung nach dem Anspruch 1 zum Abdecken zumindest einer Schüttung in zumindest einem von Wänden begrenzten Fahrsilo, umfassend zumindest ein Flächenelement zum Auflegen auf die Schüttung, wobei für das Flächenelement wenigstens eine Aufwickelungseinrichtung vorgesehen ist, und die Aufwickelungseinrichtung außerhalb des Fahrsilos in einem Bereich des Fahrsilos angeordnet ist, der dem Bereich der Entnahme von Schüttgut aus dem Fahrsilo entfernt ist, ist vorgesehen, dass die Aufwickelungseinrichtung nahe einer Wand des Fahrsilos angeordnet ist und im Bereich des oberen Wandrandes wenigstens ein Führungsprofil für das Flächenelement angeordnet ist, wobei das Führungsprofil zumindest abschnittsweise als Hohlprofil mit Durchbrüchen in seiner Profilwandung ausgebildet ist und das Führungsprofil mit zumindest einer Vakuumpumpe luftleitend verbunden ist.

Mit einer derartigen Anordnung ist das Aufwickeln oder Abwickeln eines Flächenelementes zum Aufdecken oder zum Abdecken einer Schüttung in einem Silo erleichtert.

## Beschreibung

Die Erfindung betrifft eine Anordnung zum Abdecken zumindest einer Schüttung in zumindest einem von Wänden begrenzten Fahrsilo, umfassend zumindest ein Flächenelement zum Auflegen auf die Schüttung, wobei für das Flächenelement wenigstens eine Aufwickelungseinrichtung vorgesehen ist, und die Aufwickelungseinrichtung außerhalb des Fahrsilos in einem Bereich des Fahrsilos angeordnet ist, der dem Bereich der Entnahme von Schüttgut aus dem Fahrsilo entfernt ist.

Schüttgüter werden zu verschiedenen Zwecken eingesetzt, sie sind für diese Zwecke durchaus für längere Zeit zu bevorraten. Bei Schüttgütern kann es sich beispielsweise um pflanzliche Bestandteile für die Tierhaltung handeln, es können aber auch pflanzliche Bestandteile für eine Biogasanlage bevorratet werden. Da dieses Bevorraten durchaus über mehrere Wochen oder auch über mehrere Monate andauern kann, sind die in der Schüttung aufgenommen Bestandteile gegen Witterungseinflüsse, gegen Sonneneinstrahlung und gegen andere Einflüsse zu schützen. Dazu dient das auf die Schüttung aufgelegte Flächenelement, das Folien und auch Krähennetze umfassen kann.

In der DE 10 2023 134 399 A1 ist bereits vorgeschlagen wurden, für ein derartiges Flächenelement eine Aufwickelungseinrichtung zu verwenden. Das Flächenelement kann auf die Aufwickelungseinrichtung aufgewickelt werden, dabei wird es von dem Fahrsilo und der im Fahrsilo befindlichen Schüttung abgezogen. Wenn die Schüttung abgedeckt werden soll, kann das Flächenelement von der Aufwickelungseinrichtung auch wieder abgewickelt werden.

Gerade bei einem Windangriff ist die Handhabung eines von der Aufwickelungseinrichtung Flächenelementes schwierig. Eine Windbö kann unter das Flächenelement geraten und dieses anheben. Dabei auftretende Kräfte können auch von zwei oder drei erwachsenen Personen nicht gehalten werden.

Der Erfindung liegt die Aufgabe zugrunde, eine Anordnung der eingangs genannten Gattung aufzuzeigen, mit der das Aufwickeln oder Abwickeln eines Flächenelementes zum Aufdecken oder zum Abdecken einer Schüttung einem Silo erleichtert ist.

Diese Aufgabe ist erfindungsgemäß dadurch gelöst, dass die Aufwickelungseinrichtung nahe einer Wand des Fahrsilos angeordnet ist und im Bereich des oberen Wandrandes wenigstens ein Führungsprofil für das Flächenelement angeordnet ist, wobei das Führungsprofil zumindest abschnittsweise als Hohlprofil mit Durchbrüchen in seiner Profilwandlung ausgebildet ist und das Führungsprofil mit zumindest einer Vakuumpumpe luftleitend verbunden ist.

Bei der erfindungsgemäßen Anordnung ist ein erfindungsgemäß ausgebildetes Bauteil vorhanden, nämlich das im Bereich des oberen Randes der Wand angeordnete Führungsprofil. Dieses Führungsprofil kann auf den oberen Rand der Wand, über die das Flächenelement von der Aufwickelungseinrichtung zum Fahrsilo gezogen wird, aufgelegt werden. In diesem Fall wird das Flächenelement eng entlang dieses Führungsprofils geführt, das Führungsprofil ist als Abgleiter für das Flächenelement bestimmt. Erfindungsgemäß ist vorgesehen, dass im Führungsprofil eine Luftführung ermöglicht ist, da dieses zumindest abschnittsweise als Hohlprofil ausgebildet ist. Das Hohlprofil ist mit Durchbrüchen ausgerüstet, so dass aus dem Hohlprofil Luft ein- oder austreten kann. Dazu ist weiterhin erfindungsgemäß vorgesehen, dass das Führungsprofil mit zumindest einer Vakuumpumpe luftleitend verbunden ist, so dass an das als Hohlprofil ausgebildete Führungsprofil ein Vakuum anlegbar ist.

Aufgrund dieses angelegten Vakuums wird durch die Durchbrüche Luft aus dem Zwischenraum zwischen aufgelegtem Flächenelement und Schüttung in das Führungsprofil eingesaugt und weggeführt. Unterhalb des Flächenelementes entsteht dadurch ein Unterdruck. Dieser Unterdruck führt dazu, dass das Flächenelement gegen die Schüttung geführt wird. Gerade bei Windangriffen ist somit die Gefahr verringert, dass eine Windböe unterhalb des Flächenelementes geraten kann und dieses anhebt. Aufgrund des angelegten Vakuums liegt das Flächenelement relativ plan auf der Schüttung auf und gibt dem Wind keine Angriffsfläche.

Vorzugsweise ist das Führungsprofil über seine gesamte Länge als Hohlprofil ausgebildet. Das Vakuum wird also über die gesamte Länge des Führungsprofils und somit zum Beispiel über die gesamte Breite des Fahrsilos angelegt. Das Flächenelement wird vorzugsweise über die gesamte Breite des Fahrsilos ausgebreitet und aufgelegt, vorteilhaft wird somit auch der Unterdruck über das gesamte Flächenelement verteilt.

Das Führungsprofil kann ein rohrförmiges Profil sein, es kann aber auch ein Luftleitungskanal mit rechteckigem Querschnitt sein. In beiden Fällen oder auch bei anderer Ausgestaltung des Führungsprofils werden die Durchbrüche vorzugsweise an der Seite des Führungsprofils angeordnet, die dem Fahrsilo zugekehrt ist. Das Vakuum soll auf der Seite des Fahrsilos wirken.

Zur weiteren Ausbildung der Erfindung kann noch vorgesehen sein, dass die Vakuumpumpe in einem separaten Gehäuse angeordnet ist und über wenigstens eine Luftleitung mit dem Führungsprofil verbunden ist.

Ein Ausführungsbeispiel der erfindungsgemäßen Anordnung ist in der Zeichnung dargestellt. Es zeigen:
- Figur 1:: eine Draufsicht auf ein Fahrsilo mit einer Anordnung zum Abdecken zumindest einer Schüttung,
- Figur 2:: eine Seitenansicht des Fahrsilos aus Figur 1,
- Figur 3:: eine weitere Seitenansicht des Fahrsilos aus Figur 1
- Figur 4:: eine maßstäblich vergrößerte Ansicht der Einzelheit IV in Figur 2,
- Figur 5:: eine maßstäblich vergrößerte Ansicht der Einzelheit V in Figur 1,
- Figur 6:: eine maßstäblich vergrößerte Ansicht der Einzelheit VI in Figur 2,
- Figur 7:: eine maßstäblich vergrößerte Ansicht der Einzelheit VII in Figur 3, und
- Figur 8:: eine perspektive Ansicht einer alternativen Ausbildung eines Bauteils der Anordnung nach Figur 1.

Das Fahrsilo ist rechteckig ausgebildet. Es hat längere Seitenwände 1 und eine kürzere Seitenwand 2. Die Seitenwände 1, 2 stehen auf einem Boden 3 auf, auf diesen Boden 3 ist eine Schüttung 4 zwischen die Seitenwände 1 aufgebracht.

Die Schüttung 4 ist mit einem Flächenelement 5 belegt. Das Flächenelement 5 ist Teil der erfindungsgemäßen Anordnung zum Abdecken, es bedeckt die Schüttung 4 vollständig, nur ein schmaler Bereich der Schüttung 4 bleibt frei zur Entnahme.

Der kürzeren Seitenwand 2 des Fahrsilos ist außerhalb des Fahrsilos eine Aufwickelungseinrichtung 6 für das Flächenelement 5 zugeordnet. Die Aufwickelungseinrichtung 6 hat eine Aufwickelwelle 7, die parallel zur Seitenwand 2 über deren gesamte Länge verläuft. Wird die Aufwickelwelle 7 in eine Drehung versetzt, dann erfolgt ein Aufwickeln des Flächenelementes 5 in Richtung der Pfeile 8. Eine Folge dieses Aufwickelns ist eine Freigabe eines größeren Entnahmebereiches der Schüttung 4.

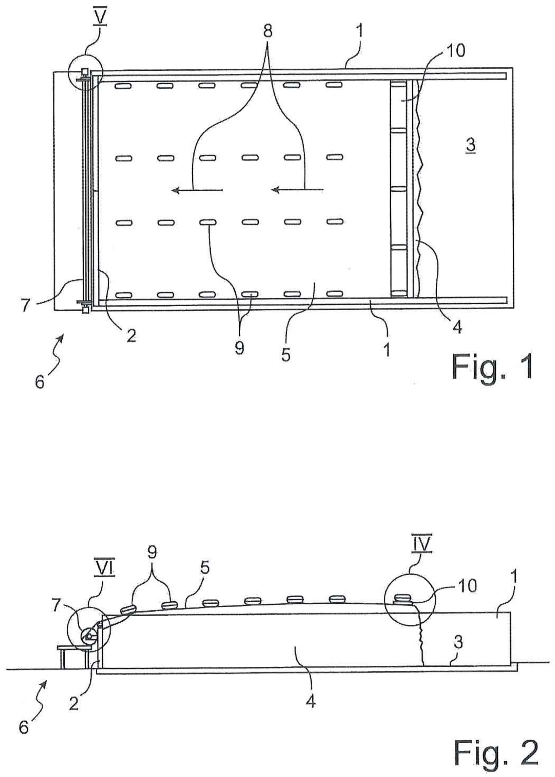

Figur 2 zeigt die Schüttung 4 in einer Seitenansicht, sie ist über weite Bereiche mit dem Flächenelement 5 belegt. Auf das Flächenelement 5 sind Bewehrungselemente 9 aufgelegt.

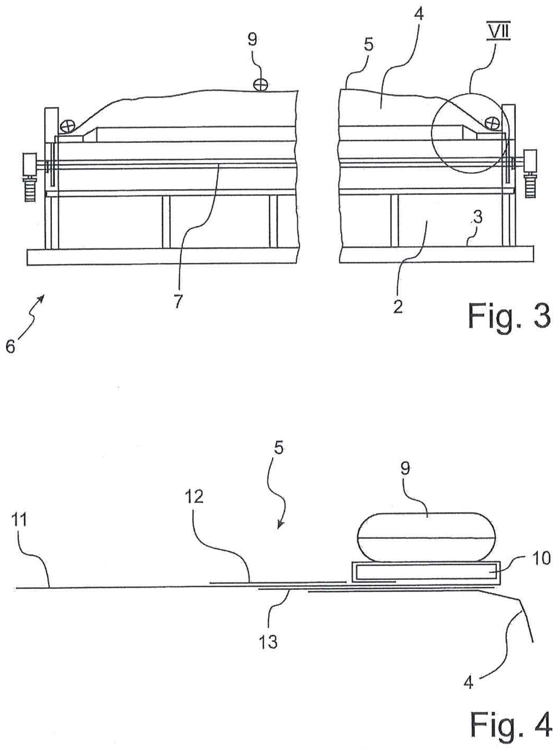

Figur 3 zeigt, dass die Aufwickelwelle 7 der Aufwickelungseinrichtung 6 über die gesamte Breite des Fahrsilos verläuft.

Die in Figur 4 gezeigte Einzelheit zeigt die vordere Kante des Flächenelementes 5 im Bereich der Entnahme von Schüttgütern aus der Schüttung 4. Für dieses freie Ende des Flächenelementes 5 ist ein Abschlussprofil 10 vorgesehen. Das Flächenelement 5 kann um dieses Abschlussprofil 10 gewickelt sein. Das Abschlussprofil 10 ist dann noch mit einem Bewehrungselement 9 beschwert.

Figur 4 zeigt noch, dass das Flächenelement 5 aus verschiedenen Folien und Lagen besteht. So ist eine Abdeckfolie 11 vorhanden, dazu auch ein Vogelschutz- bzw. Krähennetz 12. Direkt auf der Schüttung 4 liegt eine Überziehfolie 13.

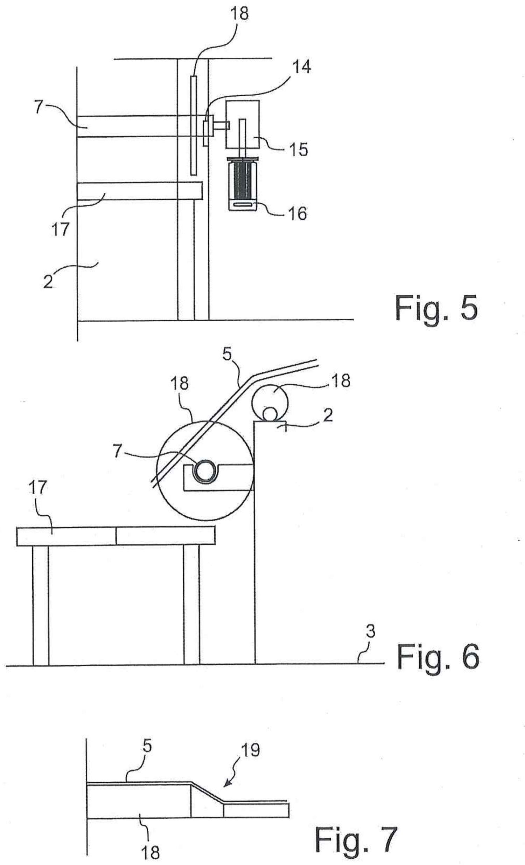

Figur 5 zeigt in einer Einzelheit noch einmal die Aufwickelwelle 7. Diese ist in Halterungen 14 aufgenommen. Die Aufwickelwelle 7 ist über ein Getriebe 15 mit einem Elektromotor 16 verbunden. Die aus Getriebe 15 und Elektromotor 16 gebildete Antriebseinrichtung ermöglicht ein Drehen der Aufwickelwelle 7 in beide Drehrichtungen. Der Aufwickelwelle 7 und der kürzeren Seitenwand 2 des Fahrsilos ist noch eine Ablagefläche 17 für auf dem Flächenelement 5 liegende Bewehrungselemente 9 zugeordnet.

Diese Ablagefläche 17 ist auch in Figur 6 gezeigt. Sie wird durch einen Tisch bereitgestellt, der der Aufwickelwelle 7 zugeordnet ist. Zusätzlich ist die Aufwickelwelle 7 noch mit Randscheiben 18' ausgerüstet.

Figur 6 zeigt noch, dass auf der kürzeren Seitenwand 2 des Fahrsilos ein Führungsprofil 18 angeordnet ist. Das Flächenelement 5 wird beim Aufwickeln auf die Aufwickelwelle 7 über dieses Führungsprofil 18 gezogen. Dieses ist in Figur 7 in einer Seitenansicht gezeigt, es wird deutlich, dass das Führungsprofil 18 in seinem oberen Längsrand an den freien Enden Rücksprünge 19 hat. Jeder Rücksprung 19 wird durch ein Reduzierstück im Führungsprofil 18 erreicht. Das Flächenelement 5 legt sich an das Führungsprofil 18 eng an, da es ja über dieses Führungsprofil 18 gezogen wird. Es erfolgt dann auch eine enge Anlage an dem Rücksprungabschnitt 19, dadurch ist erreicht, dass das Flächenelement 5 sich nicht von den Rändern entfernt.

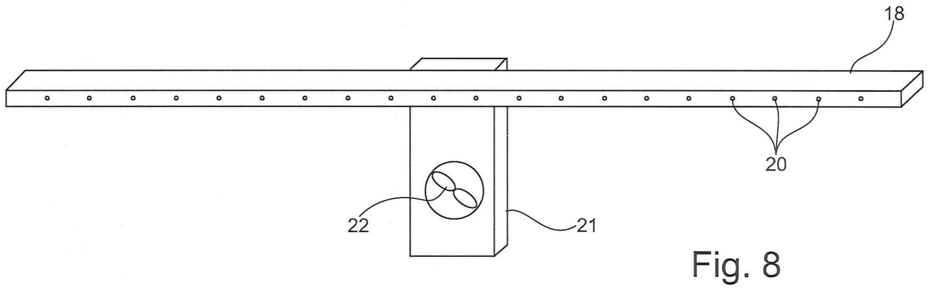

Figur 8 zeigt eine Ausbildung des Führungsprofils 18 in Form eines Luftkanals mit rechteckigem Querschnitt. Dieses Führungsprofil 18 ist als Hohlprofil ausgebildet, in seine Wanderung sind Durchbrüche 20 eingebracht. Das Führungsprofil 18 kann, wie in Figur 6 gezeigt, auf die Seitenwand 2 aufgelegt werden. Es wird so aufgelegt, dass die Durchbrüche 20 in Richtung der Schüttung 4 ausgerichtet sind.

Das Führungsprofil 18 ist an ein Gehäuse 21 angesetzt, in dem eine Vakuumpumpe 22 angeordnet ist. Die Vakuumpumpe 22 ist mit dem Inneren des Führungsprofils 18 luftleitend verbunden, so dass mit der Vakuumpumpe 22 an das Führungsprofil 18 ein Vakuum anlegbar ist.

Auch der Vakuumpumpe 22 ist vorzugsweise ein Elektromotor zugeordnet, dieser Elektromotor kann drehzahlgeregelt sein. Es kann für diesen Elektromotor eine drahtlose Fernbedienung vorgesehen werden, die ein Mitarbeiter im Fahrsilo bei sich trägt. Wird bei einem Auslegen des Flächenelementes eine Windbö festgestellt, kann die Drehzahl einfach nach oben geregelt werden und der Vakuumeffekt verstärkt werden.

## Patentansprüche

1. Anordnung zum Abdecken zumindest einer Schüttung in zumindest einem von Wänden begrenzten Fahrsilo, umfassend zumindest ein Flächenelement zum Auflegen auf die Schüttung, wobei für das Flächenelement wenigstens eine Aufwickelungseinrichtung vorgesehen ist, und die Aufwickelungseinrichtung außerhalb des Fahrsilos in einem Bereich des Fahrsilos angeordnet ist, der dem Bereich der Entnahme von Schüttgut aus dem Fahrsilo entfernt ist,
**dadurch gekennzeichnet,**
**dass** die Aufwickelungseinrichtung (6) nahe einer Wand (2) des Fahrsilos angeordnet ist und im Bereich des oberen Wandrandes wenigstens ein Führungsprofil (18) für das Flächenelement (5) angeordnet ist, wobei das Führungsprofil (18) zumindest abschnittsweise als Hohlprofil mit Durchbrüchen (20) in seiner Profilwandung ausgebildet ist und das Führungsprofil (18) mit zumindest einer Vakuumpumpe (22) luftleitend verbunden ist.

2. Anordnung nach Anspruch 1, **dadurch gekennzeichnet, dass** das Führungsprofil (18) über seine gesamte Länge als Hohlprofil ausgebildet ist.

3. Anordnung nach Anspruch 1 oder 2, **dadurch gekennzeichnet, dass** das Führungsprofil (18) ein Luftleitungskanal mit rechteckigem Querschnitt ist.

4. Anordnung nach einem der vorhergehenden Ansprüche, **dadurch gekennzeichnet, dass** die Durchbrüche (20) im Führungsprofil (18) an der Seite des Führungsprofils (18) angeordnet sind, die dem Fahrsilo zugekehrt ist.

5. Anordnung nach einem der vorhergehenden Ansprüche, **dadurch gekennzeichnet, dass** die Vakuumpumpe (22) in einem separaten Gehäuse (21) angeordnet ist und über wenigstens eine Luftleitung mit dem Führungsprofil (18) verbunden ist.
